(19) Europäisches Patentamt / European Patent Office / Office européen des brevets

(11) **EP 2 697 956 B1**

(12) **EUROPÄISCHE PATENTSCHRIFT**

(45) Veröffentlichungstag und Bekanntmachung des Hinweises auf die Patenterteilung:
**30.10.2019   Patentblatt 2019/44**

(21) Anmeldenummer: **11716480.6**

(22) Anmeldetag: **15.04.2011**

(51) Int Cl.:
*H04L 29/12* (2006.01)     *H04L 29/06* (2006.01)

(86) Internationale Anmeldenummer:
**PCT/EP2011/001933**

(87) Internationale Veröffentlichungsnummer:
**WO 2012/139602 (18.10.2012 Gazette 2012/42)**

(54) **VERFAHREN ZUM GENIEREN VON ADRESSEN IN EINEM COMPUTERNETZWERK**

METHOD FOR GENERATING ADDRESSES IN A COMPUTER NETWORK

PROCÉDÉ POUR GÉNÉRER DES ADRESSES DANS UN RÉSEAU INFORMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2014   Patentblatt 2014/08**

(73) Patentinhaber: **Unify GmbH & Co. KG**
**80807 München (DE)**

(72) Erfinder: **CORRELL Christian**
**81377 München (DE)**

(74) Vertreter: **Fritzsche, Thomas**
**Fritzsche Patent**
**Naupliastraße 110**
**81545 München (DE)**

(56) Entgegenhaltungen:
- NARTEN IBM CORPORATION R DRAVES MICROSOFT RESEARCH S KRISHNAN ERICSSON RESEARCH T: "Privacy Extensions for Stateless Address Autoconfiguration in IPv6; rfc4941.txt", 20070901, 1. September 2007 (2007-09-01), XP015052477, ISSN: 0000-0003 in der Anmeldung erwähnt
- EASTLAKE D ET AL: "Randomness Requirements for Security (RFC 4086)", 20050601, 1. Juni 2005 (2005-06-01), XP015041913, ISSN: 0000-0003
- HINDEN NOKIA S DEERING CISCO SYSTEMS R: "IP Version 6 Addressing Architecture; rfc4291.txt", 20060201, 1. Februar 2006 (2006-02-01), XP015054931, ISSN: 0000-0003

EP 2 697 956 B1

**Beschreibung**

Die Erfindung betrifft ein Verfahren zur Erzeugung einer Mehrzahl von Adressen für ein Netzwerkelement eines Kommunikationsnetzes.

Ein wichtiges Beispiel für ein bekanntes Verfahren zur Erzeugung von Adressen ist die Autokonfiguration (d.h. die Selbstvergabe) der (eigenen) IP Adresse eines Netzwerkelements im Rahmen der sogenannten StateLess Address Auto Configuration (SLAAC), wie sie im RFC 4862 für IPv6-Adressen spezifiziert ist. Dieses Verfahren entlastet den Netzwerk-Administrator von der Aufgabe, IP Adressen manuell einrichten zu müssen. Es basiert auf der Konstruktion einer link-lokalen IP Adresse aus einem im Grunde beliebigen Datum (dem sogenannten "Interface-Identifier"), welches die Netzwerk-Schnittstelle eines Netzwerkelements eindeutig identifiziert. Als Interface-Identifier gut geeignet ist z.B. die MAC-Adresse einer LAN-Karte (RFC 2464). Das derzeit spezifizierte Verfahren bildet jedoch nur genau eine link-lokale IP Adresse aus der MAC Adresse.

Die jüngere technische Entwicklung hat dazu geführt, dass viele (virtuelle oder Pseudo-) Netzwerk-Schnittstellen eine IP-Adresse aus demselben IP-Subnetz benötigen, dass aber nur eine (physikalische) Netzwerk-Schnittstelle mit einem Interface-Identifier, beispielsweise eine LAN-Karte mit ihrer MAC Adresse, zur Verfügung steht. Beispiele hierfür sind virtuelle Netzwerk-Schnittstellen und virtuelle Baugruppen oder mehrere virtualisierte Maschinen auf einem Host.

In diesen Fällen kann durch die Autokonfiguration gemäß SLAAC nur eine IP Adresse per Netzwerk-Schnittstelle eingerichtet werden, weil heutige Netzwerk-Schnittstellen regelmäßig nur über einen Interface-Identifier verfügen. Wird in diesen Fällen eine ganze Gruppe von IP Adressen benötigt, müssen alle übrigen IP Adressen manuell hinzugefügt werden. Eine andere bekannte Lösung dieses Problems besteht darin, dass im Zusammenhang mit einer Netzwerkschnittstelle mehrere Interface-Identifier verwendet werden, beispielsweise indem jeder Netzwerk-Schnittstelle einer virtuellen Maschine eine eigene MAC Adresse zugewiesen wird. Zu diesem Zweck wurde bereits ein eigenes MAC Adressband (OO-50-56-xx-xx-xx) offiziell registriert.

Die Spezifikation RFC 4291 definiert die Adressierungsarchitektur des IP Version 6 (IPv6)-Protokolls und enthält das IPv6-Adressierungsmodell, Textdarstellungen von IPv6-Adressen, die Definition von IPv6 Unicast-Adressen, Anycast-Adressen und Multicast-Adressen sowie von einem IPv6-Knoten benötigte Adressen. In RFC 4086 wird auf viele Fallstricke im Umgang mit schlechten Entropiequellen oder traditionellen Pseudo-Zufalls-Zahl-Erzeugungsverfahren zum Erzeugen von Zufallsgrößen hingewiesen. RFC 4086 empfiehlt die Verwendung von echten Zufallshardwaretechniken und zeigt, dass die vorhandene Hardware auf vielen Systemen für diesen Zweck verwendet werden kann.

Eine Aufgabe der vorliegenden Erfindung kann darin gesehen werden, eine technische Lehre anzugeben, die diese Situation verbessert oder Nachteile bekannter Lösungen nach Möglichkeit vermeidet. Diese Aufgabe wird durch ein Verfahren oder ein Netzwerkelement nach dem einem der unabhängigen Patentansprüche gelöst. Die Unteransprüche sollen vorteilhafte Weiterbildungen der Erfindung unter Schutz stellen.

In diesem Zusammenhang ist unter einem Kommunikationsnetz ein Zusammenschluss verschiedener technischer, primär selbstständiger elektronischer Systeme (insbesondere Computer oder anderer Kommunikationsgeräte, insbesondere auch funktechnologischer Komponenten usw.) zu verstehen, der die Kommunikation der einzelnen Systeme untereinander ermöglicht. Beispiele für Kommunikationsnetze sind Datennetze, Computernetze, Telefonnetze und das Internet.

In diesem Zusammenhang ist unter einem Netzwerkelement eines Kommunikationsnetzes ein an der Kommunikation beteiligtes oder zur Kommunikation fähiges Gerät in einem solchen Kommunikationsnetz zu verstehen. Netzwerkelemente werden auch als Netzwerkkomponenten bezeichnet. Sie verfügen vorzugsweise über wenigstens eine Netzwerkschnittstelle, die ihnen den Zugang zu dem Kommunikationsnetz ermöglicht. Wichtige Beispiele für Netzwerkelemente sind Kommunikationsendgeräte, aber auch sogenannte Switches, Router und ähnliche zur Kommunikation fähige Geräte in solchen Kommunikationsnetzen.

In diesem Zusammenhang ist unter einer Adresse für ein Netzwerkelement eines Kommunikationsnetzes eine Information zu verstehen, die verwendet wird, um Daten oder Nachrichten von einem Absender zum vorgesehenen Empfänger transportieren zu können (http://de.wikipedia.org/wiki/IP-Adresse). Wichtige Beispiele für Adressen sind IP-Adressen. Ähnlich der Postanschrift auf einem Briefumschlag werden Datenpakete mit einer IP-Adresse versehen, die den Empfänger vorzugsweise eindeutig identifiziert. Aufgrund dieser Adresse können die "Poststellen" der Kommunikationsnetze, beispielsweise die Router, entscheiden, in welche Richtung das Paket weiter transportiert werden soll. Im Gegensatz zu Postadressen sind IP-Adressen nicht an einen bestimmten Ort gebunden. Um eine Kommunikation zwischen zwei technischen Geräten aufzubauen, muss jedes der Geräte in der Lage sein, dem anderen Gerät Daten zu senden. Damit diese Daten bei der richtigen Gegenstelle ankommen, muss diese eindeutig benannt (adressiert) werden. Dies geschieht in IP-Netzen mit einer IP-Adresse. So wird zum Beispiel ein Webserver von einem Webbrowser direkt über seine IP-Adresse angesprochen. Der Browser fragt dazu für einen Domainnamen, zum Beispiel "www.example.com", die IP-Adresse bei einem Nameserver an und spricht den Webserver dann direkt unter seiner IP-Adresse "198.51.100.42" an.

Eine IP-Adresse ist eine Adresse in Computernetzen, die - wie z. B. das Internet - auf dem Internetprotokoll (IP) basieren. Sie wird Geräten zugewiesen, welche an das Netz angebunden sind und macht die Geräte so adressierbar und damit erreichbar. Die IP-Adresse kann einen einzelnen Empfänger oder eine Gruppe von Empfängern bezeichnen (Multicast, Broadcast). Umgekehrt können einem Computer mehrere IP-Adressen zugeordnet sein. Die bekannteste Notation der heute geläufigen IPv4-Adressen besteht aus vier Zahlen, die Werte von 0 bis 255 annehmen können und mit einem Punkt getrennt werden, beispielsweise 127.0.0.1. Technisch gesehen ist die Adresse eine 32-stellige (IPv4) oder 128-stellige (IPv6) Binärzahl.

In diesem Zusammenhang ist unter einem Identifikator eine Information zu verstehen, die ein Netzwerkelement oder eine Netzwerkschnittstelle - vorzugsweise eindeutig - identifizierbar macht. Beispiele für solche Identifikatoren sind die aus dem Internet bekannten Interface Identifier (http://de.wikipedia.org/wiki/IPv6). Andere Beispiele sind die sogenannten MAC-Adressen. IPv6-Adressen sind 128 Bit lang (IPv4: 32 Bit). Die letzten 64 Bit bilden bis auf Sonderfälle einen für die Netzwerkschnittstelle (engl. Interface) eindeutigen Interface Identifier.

Eine Netzwerkschnittstelle kann unter mehreren IP-Adressen erreichbar sein; in der Regel ist sie dies mittels ihrer link-lokalen Adresse und einer global eindeutigen Adresse. Derselbe Interface Identifier kann damit Teil mehrerer IPv6-Adressen sein, welche mit verschiedenen Präfixen auf dieselbe Netzwerkkarte gebunden sind. Insbesondere gilt dies auch für Präfixe möglicherweise verschiedener Provider; dies vereinfacht Multihoming-Verfahren. Hat z. B. ein Netzwerkgerät die IPv6-Adresse 2001:0db8:85a3:08d3:1319:8a2e:0370:7347/64, so lautet das Präfix 2001:0db8:85a3:08d3::/64 und der Interface Identifier 1319:8a2e:0370:7347.

Da die Erzeugung des Interface Identifiers aus der global eindeutigen MAC-Adresse die Nachverfolgung von Benutzern ermöglicht, wurden die Privacy Extensions (RFC 4941) entwickelt, um diese permanente Kopplung der Benutzeridentität an die IPv6-Adressen aufzuheben. Indem der Interface Identifier zufällig generiert wird und regelmäßig wechselt, soll ein Teil der Anonymität von IPv4 wiederhergestellt werden.

Da im Privatbereich in der IPv6-Adresse aber sowohl der Interface Identifier als auch das Präfix allein recht sicher auf einen Nutzer schließen lassen können, ist aus Datenschutzgründen in Verbindung mit den Privacy Extensions ein vom Provider dynamisch zugewiesenes, z. B. täglich wechselndes, Präfix wünschenswert. Dabei ist es wie oben beschrieben grundsätzlich möglich, auf derselben Netzwerkkarte sowohl IPv6-Adressen aus dynamischen als auch aus fest zugewiesenen Präfixen parallel zu verwenden.

In diesem Zusammenhang ist unter einem vorhandenen Identifikator ein Identifikator eines Netzwerkelements zu verstehen, welcher diesem Netzwerkelement vor dem Ablauf des erfindungsgemäßen Verfahrens bereits zugewiesen oder zugeordnet war. Wichtige Beispiele für solche vorhandenen Identifikatoren sind MAC-Adressen, die insbesondere den Netzwerkschnittstellen (wie beispielsweise LAN-Karten) von Netzwerkelementen (wie beispielsweise Computern) vorzugsweise gemäß RFC 2464 zugeordnet sind.

Die MAC-Adresse (Media-Access-Control-Adresse) ist die Hardware-Adresse jedes einzelnen Netzwerkadapters, die zur eindeutigen Identifizierung des Geräts in einem Rechnernetz dient (http://de.wikipedia.org/wiki/MAC-Adresse). Bei Apple wird sie auch Ethernet-ID, Airport-ID oder Wi-Fi-Adresse genannt, bei Microsoft Physikalische Adresse.

Die MAC-Adresse wird der Sicherungsschicht (Schicht 2) des OSI-Modells zugeordnet. Im von der IEEE erweiterten OSI-Modell wird sie der Unterschicht Media Access Control (Schicht 2a) zugeordnet. Um die Sicherungsschicht mit der Vermittlungsschicht zu verbinden, wird zum Beispiel bei Ethernet das Address Resolution Protocol im Rahmen von IPv4 verwendet. Im IPv6 gibt es ein neues Protokoll, Neighbor Discovery Protocol (NDP), das diese Funktion übernimmt.

Netzwerkgeräte brauchen dann eine MAC-Adresse, wenn sie auf Schicht 2 explizit adressiert werden sollen, um Dienste auf höheren Schichten anzubieten. Leitet das Gerät wie ein Repeater oder Hub die Netzwerkpakete nur weiter, ist es auf der Sicherungsschicht nicht sichtbar und braucht folglich keine MAC-Adresse. Bridges und Switches untersuchen zwar die Pakete der Sicherungsschicht, um das Netzwerk physikalisch in mehrere Kollisionsdomänen aufzuteilen, nehmen aber selbst nicht aktiv an der Kommunikation teil, brauchen also für diese Basisfunktionen ebenfalls keine MAC-Adresse.

Ein Switch benötigt aber eine MAC-Adresse, wenn er selbst über das Rechnernetz administriert wird oder Monitoring-Dienste anbietet (zum Beispiel über Telnet, SNMP oder HTTP). Eine MAC-Adresse wird ebenfalls benötigt, wenn Bridges oder Switches den Spanning Tree Algorithmus zur Vermeidung von Schleifen in redundant ausgelegten Rechnernetzen verwenden. Im Falle von Ethernet-Netzen besteht die MAC-Adresse aus 48 Bit (sechs Bytes). Die Adressen werden in der Regel hexadezimal geschrieben.

Üblich ist dabei eine byteweise Schreibweise, wobei die einzelnen Bytes durch Bindestriche oder Doppelpunkte voneinander getrennt werden, z. B. 08-00-20-ae-fd-7e oder 08:00:20:ae:fd:7e. Seltener zu finden sind Angaben wie 080020aefd7e oder 0800.20ae.fd7e. Die Reihenfolge der Zeichen ist allerdings nicht bei allen Anwendungen gleich. Man unterscheidet hier zwischen der kanonischen und der "Bit-reversed"-Darstellung. Die kanonische Form wird für Darstellungen bevorzugt.

Die übliche Darstellung von MAC-Adressen, wie sie beispielsweise in der Ausgabe von ipconfig/ifconfig erscheint, wird auch als kanonisches Format ("canonical form", "LSB format" bzw. "Ethernet format") bezeichnet. Es gibt die Reihenfolge an, in der die Adresse in IEEE 802.3 (Ethernet) und IEEE 802.4 (Token Bus) übertragen wird. Hier startet die Übertragung mit dem niederwertigsten Bit (LSB, least significant bit) eines Oktetts (Ausnahme ist die Frame Check Sequence - FCS).

IEEE 802.5 (Token Ring) und IEEE 802.6 starten die Übertragung mit dem höchstwertigen Bit (MSB, most significant bit). Dies kann leicht zu Missverständnissen führen, wenn nicht angegeben wird, ob von der kanonischen Darstellung in normaler Bytedarstellung oder von der umgekehrten Bitübertragungsdarstellung die Rede ist. Eine Adresse, deren kanonische Form beispielsweise 12-34-56-78-9A-BC ist, wird bei der Standardübertragung (LSB zuerst, heißt: von rechts nach links gelesen) auf der Leitung in Form der Bitfolge 01001000 00101100 01101010 00011110 01011001 00111101 übertragen.

In Token-Ring-Netzwerken (MSB zuerst, heißt: von links nach rechts gelesen, also natürlich sprachlich) würde die Übertragung in Form der Bitfolge 00010010 00110100 01010110 01111000 10011010 10111100 stattfinden. Wenn dies bei der Umsetzung der Bitfolgen in die kanonische Darstellung nicht konsistent beachtet wird, kann z. B. die letztere Darstellung fälschlicherweise als 48-2C-6A-1E-59-3D (LSB zuerst) interpretiert werden. Die Darstellung in Token-Ring-Netzwerken wird dann aber als "Bit-reversed order", "Noncanonical form", "MSB format", "IBM format", oder "Token Ring format" wie in RFC 2469 aufgeführt bezeichnet.

In diesem Zusammenhang ist unter einer konfigurierten Zusatzinformation eine vorzugsweise lokal bei einem Netzwerkelement gespeicherte, vorzugsweise speziell für den Zweck der Erzeugung einer Mehrzahl von Adressen für dieses Netzwerkelement konfigurierte Information zu verstehen. Im Fall ihrer lokalen Speicherung bei einem Netzwerkelement wird die konfigurierte Zusatzinformation auch als lokale Zusatzinformation bezeichnet. Diese Zusatzinformation dient vorzugsweise ausschließlich dazu, innerhalb eines Hosts unterscheidbare Identifikatoren, also beispielsweise Interface-Identifier erzeugen zu können. In diesen Fällen genügt es also, wenn die Zusatzinformationen innerhalb eines Host (d.h. "host-intern") eindeutig sind.

Die erfindungsgemäße Erzeugung einer Mehrzahl von Adressen für ein Netzwerkelement stützt sich vorzugsweise auf einen Grundgedanken, der auch der IPv6-Adress-Autokonfiguration zugrunde liegt: Eine IP-Adresse enthält als wesentlichen Bestandteil einen global eindeutigen Interface-Identifier, der vorzugsweise aus der global eindeutigen MAC-Adresse der Netzwerkschnittstelle eines Netzwerkelements, also beispielsweise einer LAN-Karte, gebildet wird. Bevorzugter Startpunkt für dieses Verfahren ist ein vorhandener Identifikator, beispielsweise der "gewöhnliche" Interface-Identifier, wie er in RFC 2464 spezifiziert ist.

In diesem Zusammenhang ist unter einer Kollision virtueller Identifikatoren oder der aus diesen virtuellen Identifikatoren erzeugten Adressen das unerwünschte Auftreten nicht unterscheidbarer virtueller Identifikatoren oder aus diesen virtuellen Identifikatoren erzeugter Adressen in wenigsten einem Bereich eines Kommunikationsnetzes zu verstehen, in welchen die Unterscheidbarkeit dieser virtuellen Identifikatoren oder der aus diesen virtuellen Identifikatoren erzeugten Adressen aus technischen Gründen erforderlich oder wenigstens erwünscht ist.

Gemäß einer bevorzugen Ausführungsform der Erfindung, deren Merkmale auch mit Merkmalen anderer Ausführungsformen kombiniert werden können, ist ein Verfahren vorgesehen, bei dem aus einem virtuellen Identifikator eine link-lokale Adresse erzeugt wird, indem diesem virtuellen Identifikator ein link-lokales Präfix (auch: "Prefix") vorangestellt wird.

In diesem Zusammenhang ist unter einer link-lokalen Adresse eine Adresse mit einem definierten Gültigkeitsbereich zu verstehen. Link-Lokale ("Unicast"-) Adressen werden (http://www.neogrid.de/was-ist/Link-Lokale-Adresse) vor allem seit der Einführung des IPv6 verwendet: Die Link-Lokalen Adressen sind in den ersten Bits der IPv6 Adresse, dem Präfix, enthalten und haben eine Sonderfunktion: sie werden von den Routern nicht weitergeleitet und sind nur im gleichen Teilnetz erreichbar. IPv6 arbeitet mit 'Scopes', das sind netztopologische Bereiche für die die Adresse gültig ist. Die Scopes sind entweder global eindeutig oder link-lokal eindeutig: link-lokale Adressen sind also nur auf dem physikalischen Link, an dem der jeweilige Netzknoten angeschlossen ist, eindeutig und gültig. Eine Link-Lokale Adresse wird ausschließlich auf dem lokalen Netzwerklink verwendet. Link-Lokale Adressen sind vorzugsweise nur innerhalb des Unternehmensnetzwerkes gültig und können außerhalb nicht erkannt werden.

Eine Netzwerkschnittstelle kann (http://de.wikipedia.org/wiki/IPv6) unter mehreren IP-Adressen erreichbar sein; in der Regel ist sie mittels ihrer link-lokalen Adresse und einer global eindeutigen Adresse erreichbar. Derselbe Interface Identifier kann damit Teil mehrerer IPv6-Adressen sein, welche mit verschiedenen Präfixen auf dieselbe Netzwerkkarte gebunden sind. Insbesondere gilt dies auch für Präfixe möglicherweise verschiedener Provider; dies vereinfacht beispielsweise sogenannte "Multihoming-Verfahren".

In diesem Zusammenhang ist unter einem link-lokalen Präfix ein Präfix, also ein Bestandteil eines Identifikators oder eine Symbolfolge, die einen solchen Bestandteil eines Identifikators als Teilfolge enthält, zu verstehen, die nur innerhalb eines Teilnetzes gültig sind. Link-lokale Adressen sollen von Routern nicht weitergeleitet werden und sind daher nur im gleichen Teilnetz erreichbar. Soll ein Gerät mittels einer dieser link-lokalen Adressen kommunizieren, muss die dabei verwendete Netzwerkschnittstelle mit angegeben werden, weil link-lokale Präfixe auf einem Gerät mehrfach vorhanden sein können, weshalb unterschiedliche Netzsegmente den gleichen Adressraum beanspruchen können.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem aus einer link-lokalen Adresse eine globale Adresse erzeugt wird, indem das link-lokale Präfix durch ein globales Präfix ersetzt wird.

In diesem Zusammenhang ist unter einer globalen Adresse eine im gesamten Kommunikationsnetz gültige Adresse zu verstehen. Bei IPv6 ist die Bindung mehrerer Adressen an eine Netzwerk-Schnittstelle die Regel, um beispielsweise eine link-lokale neben einer globalen Adresse und dynamisch vergebene Präfixe neben festen zu betreiben oder um IPv6-Adressen mehrerer Internetprovider auf demselben Host zur Verfügung zu haben. In diesem Zusammenhang ist unter einem globalen Präfix ein im gesamten Kommunikationsnetz gültiges Präfix zu verstehen.

Gemäß der Erfindung ist ein Verfahren vorgesehen, bei dem das Kommunikationsnetz ein Netzwerk ist, in dem Nachrichten paketvermittelt, vorzugsweise unter Verwendung eines im Internet verwendeten Protokolls zwischen Netzwerkelementen übertragen werden, die Adressen IPv6-Adressen sind und die vorhandenen Identifikatoren der Netzwerkelemente die MAC-Adressen der Netzwerk-Schnittstellen dieser Netzwerkelemente sind.

Eine Netzwerkschnittstelle (http://de.wikipedia.org/wiki/Netzwerkschnittstelle) ist eine Schnittstelle, die einem Computer, einem Netzwerkelement oder einer Netzwerkkomponente den Zugang zu einem Rechnernetz ermöglicht. Umgangssprachlich wird diese auch Port oder Netzwerkanschluss genannt. Heutzutage sind sie häufig auf der Hauptplatine von PCs integriert. Die typische Netzwerkschnittstelle für PCs ist eine der Varianten des Ethernet Standards. Diese bietet einen Netzwerkanschluss, meist in Form einer RJ-45-Buchse, an die ein Twisted-Pair-Kabel angeschlossen wird. Ältere Netzwerkkarten haben auch noch einen BNC-Anschluss. Ein Anschluss für Lichtwellenleiter ist ebenfalls möglich. Auch der Netzwerkanschluss eines Modems oder einer ISDN-Karte ist eine Netzwerkschnittstelle. Weit verbreitet sind inzwischen auch drahtlose Netzwerkschnittstellen zu einem WLAN.

Damit ein Endgerät Zugriff auf ein Netzwerk bekommt, reicht in der Regel eine einzelne Netzwerkschnittstelle. Andere Komponenten in einem Netzwerk benötigen dagegen mehrere Netzwerkschnittstellen. Eine Bridge hat mindestens zwei Netzwerkschnittstellen, da damit mehrere Netzwerksegmente miteinander verbunden werden. Ebenso haben Router, Hubs und Switches mehrere Netzwerkschnittstellen.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem zur Erzeugung eines virtuellen Identifikators aus einer MAC-Adresse eines Netzwerkelements deren Mittelteil durch das Bild einer in dem Netzwerkelement lokal gespeicherten Zusatzinformation unter einer Hashfunktion ersetzt wird.

In diesem Zusammenhang ist unter einer Hashfunktion (http://de.wikipedia.org/wiki/Hashfunktion) eine nahezu beliebige Abbildung zu verstehen, die zu einer Eingabe aus einer oft sehr großen Quellmenge eine Ausgabe aus einer typischerweise kleineren Zielmenge erzeugt, den sogenannten Hashcode (oder Hashwert). Der Name "Hashfunktion" stammt vom englischen Verb "to hash", das sich als "zerhacken" übersetzen lässt. Der deutsche Name lautet Streuwertfunktion. Beide Namen deuten darauf hin, dass diese Funktionen normalerweise darauf angelegt sind, die Daten zu "verstreuen" und zu "zerhacken" (siehe auch Zerhacker in der Funktechnik). Speziell in der Informatik verwendet man auch den Begriff Hash-Algorithmus (engl. hash algorithm), da Hash-funktionen oftmals in Form eines Algorithmus statt einer mathematischen Funktion spezifiziert werden. Der Begriff Streuspeicherverfahren wird in der Datenspeicherung verwendet für Verfahren, die eine Hashfunktion zur Organisation der Daten einsetzen.

Die Hash- oder Streuwerte sind meist skalare Werte aus einer begrenzten Teilmenge der natürlichen Zahlen. Eine "gute" Hashfunktion liefert dabei für die (erwarteten) Daten Werte, so dass zwei unterschiedliche Eingaben auch zu unterschiedlichen Ausgabewerten führen (ansonsten spricht man von einer Kollision). Ein Hashwert wird deshalb auch als Fingerprint bezeichnet, da er eine nahezu eindeutige Kennzeichnung einer größeren Datenmenge darstellt, so wie ein Fingerabdruck einen Menschen nahezu eindeutig identifiziert. In der Kryptologie werden Hashcodes beispielsweise verwendet, um den Inhalt eines Dokumentes zu identifizieren, ohne dass man den kompletten Inhalt übermitteln oder vergleichen muss. In der Datenspeicherung dient der Hashcode dazu, schnell die Speicherstelle der angefragten Daten zu finden, ohne lange suchen zu müssen. Bei Prüfsummen verwendet man Hashwerte, um Übertragungsfehler zu erkennen.

Hashfunktionen unterscheiden sich in der Definitionsmenge ihrer Eingaben, der Zielmenge der möglichen Ausgaben und im Einfluss von Mustern und Ähnlichkeiten verschiedener Eingaben auf die Ausgabe (und damit auf auftretende Kollisionen). Hashfunktionen werden vor allem in Hashtabellen, der Kryptologie und der Datenverarbeitung verwendet. Hash-Algorithmen sind darauf optimiert, Kollisionen zu vermeiden. Eine Kollision tritt dann auf, wenn zwei verschiedenen Datenstrukturen derselbe Hashwert zugeordnet wird. Da der Hashwert in der Praxis meist kürzer als die originale Datenstruktur ist, sind solche Kollisionen dann prinzipiell unvermeidlich, weshalb es Verfahren zur Kollisionserkennung geben muss. Eine gute Hashfunktion zeichnet sich dadurch aus, dass sie für die Eingaben, für die sie entworfen wurde, wenige Kollisionen erzeugt. In der Kryptographie ist es zusätzlich wünschenswert, dass es nach praktischen Maßstäben nicht möglich ist, künstlich Kollisionen zu erzeugen (Kollisionssicherheit). In Sonderfällen kann auch eine perfekte (also kollisionsresistente) Hashfunktion ermittelt werden.

Das Bild einer in dem Netzwerkelement lokal gespeicherten Zusatzinformation unter einer Hashfunktion ist der Wert, den die Hashfunktion ergibt, wenn als Eingangswert der Hashfunktion die in dem Netzwerkelement lokal gespeicherte Zusatzinformation verwendet wird.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem wenigstens ein virtueller Identifikator eine Kennzeichnung - vorzugsweise ein invertiertes Univeral/Local-Bit - erhält, anhand der er von einem herkömmlichen Identifikator eines Netzwerkelements unterschieden werden kann, welcher nicht nach einem Verfahren nach einem der vorhergehenden Ansprüche erzeugt wurde.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem die Erzeugung einiger oder aller Adressen aus einigen oder allen erzeugten virtuellen Identifikatoren erst nach wenigstens einem weiteren Verfahrensschritt stattfindet, also nicht unmittelbar nach der Erzeugung der virtuellen Identifikatoren.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem die Zusatzinformation in Form einer Tabelle vorliegt, in deren Einträgen unterschiedliche Werte für Namen virtueller Identifikatoren gespeichert sind, wobei vorzugsweise jeder Name eine Funktion des Tabellenindex ist.

In diesem Zusammenhang ist unter einer Tabelle eine Datenansammlung zu verstehen, bei der jedem vorgesehenen Wert eines Tabellenindex ein Tabellenwert oder Tabelleneintrag zugeordnet ist oder zugeordnet werden kann. Der Tabellenindex kennzeichnet also die einzelnen Einträge einer Tabelle. Eine Funktion des Tabellenindex ist ein Funktionswert, der einem bestimmten Wert eines Tabellenindex unter einer gegebenen Funktion zugeordnet wird.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem die Zusatzinformation als Eingangsdatum für einen Prüfsummen-Algorithmus verwendet wird, um einen virtuellen Identifikator zu erzeugen.

In der Informatik ist eine Prüfsumme (engl. checksum) eine einfache Maßnahme zur Gewährleistung von Datenintegrität bei der Datenübermittlung oder -speicherung. Sie wird hauptsächlich bei der Datensicherung und bei der Datenübertragung verwendet.

Bei einfachen Prüfsummenalgorithmen werden Bits, Bytes oder eine andere grundlegende Komponente von Daten einer Nachricht mit einem bestimmten Faktor multipliziert und anschließend der Reihenfolge nach aufsummiert. Der sich ergebende Wert wird dann als Prüfsumme mitgespeichert oder mit übertragen. Der Empfänger der Nachricht kann aus den Daten ebenfalls eine Prüfsumme berechnen und diese mit der mit übertragenen Prüfsumme des Senders vergleichen. Sind die beiden Prüfsummen unterschiedlich, liegt ein Übertragungsfehler vor und die Nachricht muss wiederholt werden. Sind die beiden Prüfsummen identisch, ist die Nachricht mit hoher Wahrscheinlichkeit korrekt übertragen worden.

Ein einfaches Beispiel für eine Prüfsumme ist die Quersumme der Ziffern einer Zahl. Allerdings werden mit diesem Verfahren beispielsweise "Zahlendreher", also ein häufig vorkommender Fehler in der Eingabe von numerischen Informationen durch Menschen, nicht erkannt. Prüfsummenalgorithmen, die mit einer bestimmten Gewichtung der einzelnen Summanden arbeiten, sind recht sicher gegenüber zufälligen Veränderungen, etwa Zeichenvertauschungen, -verdopplungen oder - auslassungen. Sie werden beispielsweise angewendet bei der ISBN (International Standard Book Number) und bei den EAN-Codes.

Der Begriff "Prüfsumme" wird auch für aufwendigere Prüfalgorithmen verwendet, die komplexere Berechnungen anstelle der einfachen Aufsummierung der Datenwerte vornehmen, so beispielsweise für die Zyklische Redundanzprüfung (engl. CRC). Eine Zyklische Redundanzprüfung verwendet statt einfacher Addition eine Polynomdivision und ist im Allgemeinen effektiver bei der Erkennung von Zufallsfehlern als eine primitive Prüfsumme.

Obwohl eine herkömmliche Prüfsumme nützlich ist, um vor unbeabsichtigten Änderungen zu schützen, bietet sie keine Sicherheit gegenüber beabsichtigen Datenänderungen (Manipulation), da sie trivial zu umgehen ist. Es ist deshalb oft notwendig, anstelle eines einfachen Prüfsummenalgorithmus kryptografisch stärkere Algorithmen, wie Einweg-Hash-Funktionen (z. B. Message Digests), zu benutzen. Diese stellen weiterhin die Grundlage elektronischer Unterschriften dar.

Die zyklische Redundanzprüfung (engl. cyclic redundancy check, daher meist CRC) (http://de.wikipedia.org/wiki/Zyklische_Redundanzprüfung) ist ein Verfahren zur Bestimmung eines Prüfwerts für Daten, um Fehler bei der Übertragung oder Speicherung erkennen zu können. Für jeden Datenblock wird nach einem bestimmten Verfahren ein sogenannter CRC-Wert berechnet, der dem Datenblock angefügt wird. Zur Überprüfung der Daten wird dasselbe Berechnungsverfahren auf den Datenblock einschließlich des angefügten CRC-Werts angewandt. Ist das Ergebnis dann Null, kann angenommen werden, dass der Datenblock unverfälscht ist. Verschiedene technische Anwendungen weichen allerdings von diesem Schema ab, indem sie beispielsweise die Berechnung mit einem bestimmten Wert initialisieren oder den CRC-Wert vor der Übermittlung invertieren.

CRC ist so ausgelegt, dass Fehler bei der Übertragung der Daten, wie sie beispielsweise durch Rauschen auf der Leitung verursacht werden könnten, mit hoher Wahrscheinlichkeit entdeckt werden. CRCs von seriellen Datenübertragungen können sehr einfach in Hardware realisiert werden. Zum Beispiel werden Datenübertragungen über Ethernet, sowie die meisten Festplatten-Übertragungen mit CRC-Verfahren geprüft. Das CRC-Verfahren ist nur für die Erkennung von zufälligen Fehlern ausgelegt. Es ist nicht geeignet, die Integrität der Daten zu bestätigen. Das heißt, es ist verhältnismäßig leicht, durch beabsichtigte Modifikation einen Datenstrom zu erzeugen, der den gleichen CRC-Wert wie eine gegebene Nachricht hat. Wenn eine solche Sicherheit gefordert ist, müssen kryptografische Hash-Funktionen wie beispielsweise SHA zum Einsatz kommen. Der Name des Verfahrens beruht darauf, dass der angefügte Wert keinen Informationsgehalt besitzt, der nicht bereits in dem zugrunde liegenden Datenblock enthalten ist. Er ist deshalb redundant. CRCs beruhen auf zyklischen Codes. Das sind Block-Codes, die die Eigenschaft haben, dass jede zyklische Verschiebung der Bits eines gültigen Code-Worts ebenfalls ein gültiges CodeWort ist.

Die Polynomdivision, auch Partialdivision genannt, ist ein mathematisches Rechenverfahren (http://de.wikipedia.org/wiki/Polynomdivision). Das Verfahren verläuft analog zur üblichen und aus der Schule bekannten Division von Zahlen mit Rest, nur dass hier statt zweier Zahlen zwei Polynome durcheinander dividiert werden und als Ergebnis wieder zwei Polynome - der "Ganzteil" und der Rest der Division - stehen.

Gemäß einer weiteren bevorzugen Ausführungsform der Erfindung, deren Merkmale auch mit Merkmalen anderer Ausführungsformen kombiniert werden können, ist ein Verfahren vorgesehen, bei dem ein virtueller Identifikator mit Hilfe eines CRC-Algorithmus auf der Grundlage der Polynomdivision aus einer Zusatzinformation ermittelt wird.

Außerdem ist erfindungsgemäß ein Verfahren zur Übertragung von Nachrichten in einem Kommunikationsnetz unter Verwendung einer Adresse vorgesehen, welche nach einem Verfahren nach einem der vorhergehenden Ansprüche erzeugt wurde. Außerdem ist erfindungsgemäß ein Netzwerkelement mit einer Einrichtung zur Durchführung eines Verfahrens nach einem der vorhergehenden Ansprüche vorgesehen.

Im Folgenden wird die Erfindung anhand bevorzugter Ausführungsbeispiele und mit Hilfe einer Figur näher beschrieben.

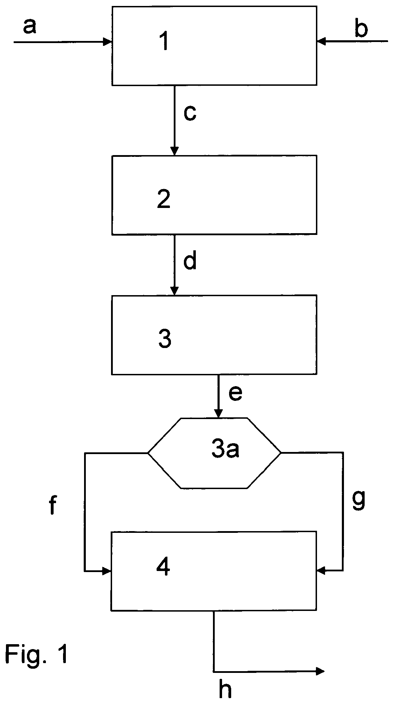

Dabei zeigt Figur 1 in schematischer Weise den Ablauf des erfindungsgemäßen Verfahrens anhand eines Ausführungsbeispiels.

Das erfindungsgemäße Verfahren kann an einem Ausführungsbeispiel erklärt werden, bei dem es um die Erzeugung von IP-Adressen geht. Die IPv6 Adress-Autokonfiguration stützt sich auf den Grundgedanken, dass eine IP Adresse als wesentlichen Bestandteil einen global eindeutigen Interface-Identifier enthält, welcher aus der global eindeutigen MAC Adresse der LAN-Karte gebildet wird. Startpunkt für das Verfahren ist also der "gewöhnliche" Interface-Identifier wie in RFC 2464 spezifiziert.

Die Autokonfiguration nach SLAAC läuft vorzugsweise grundsätzlich in drei Schritten ab:
In einem ersten Schritt findet eine Selbstgenerierung einer link-lokalen IP Adresse statt, basierend auf der MAC Adresse der LAN-Karte. In einem zweiten Schritt wird eine automatische Suche nach Routern im angeschlossenen IP Netz durchgeführt, die sogenannte Router Discovery, die als Teil des ICMPv6 angesehen werden kann. Die Router versorgen dabei den Host mit den IPv6 Netzadressen (Prefixes, oder auch Präfixe) und den Default-Routern. Der Host kann dabei mehreren IP Subnetzen gleichzeitig angehören; die Router schicken dann die Netzadresse und eine Information über den Default Router für jedes Subnetz. In einem dritten Schritt leitet der Host aus der Kombination der IPv6 Netzadressen mit der link-lokalen IP Adresse die eigenen globalen IP Adressen ab, und zwar pro IPv6 Netzadresse je eine globale IP Adresse.

Nach Abschluss von Schritt 3 besitzt der Host - ohne manuellen Eingriff - einen Satz von globalen (weltweit eindeutigen und im Internet gerouteten) IP Adressen sowie eine Default Route. Im Weiteren wird angenommen, dass der Host nur einem IP Subnetz angehört, d.h. nur eine globale IP Adresse erhält. Diese Annahme dient lediglich zur Vereinfachung der Beschreibung. Das Verfahren selbst funktioniert ebenso, wenn der Host IP Adressen für mehrere Subnetze erhält.

Nachstehend wird ein konkretes Beispiel für die Konstruktion einer link-lokalen Adresse aus einer MAC-Adresse angegeben:

Konstruktion der link-lokalen Adresse aus der MAC Adresse (RFC 2464)

Eine IPv6 Adresse setzt sich aus dem Interface Identifier und dem Prefix zusammen. Für eine link-lokale Adresse gilt:

- der Interface Identifier wird nach dem Modified EUI-64 Format aus der MAC Adresse gebildet.
- das Routing Prefix ist fest: FE80::/64

Beispiel:

MAC Adresse:  00 1A E8 84 30 12

Link-lokale Adresse:

fest

FE 80 00 00 00 00 00 00 02 1A E8 FF FE 84 30 12

Routing Prefix          Interface Identifier

Universal/Local Bit:  1 (Global Scope)

Soll nun eine Netzwerk-Schnittstelle mehrere IP Adressen erhalten, so werden erfindungsgemäß vorzugsweise zusätzlich zu diesem gewöhnlichen Interface-Identifier weitere "virtuelle" Interface-Identifier erzeugt, und zwar für jede zusätzliche IP Adresse ein weiterer Interface-Identifier.

Zur Erzeugung eines virtuellen Interface-Identifiers wird die global eindeutige MAC Adresse kombiniert mit lokalen Informationen. Diese lokalen Informationen dienen vorzugsweise ausschließlich dazu, innerhalb des Hosts unterscheidbare Interface-Identifier zu erzeugen. Daher genügt es regelmäßig, wenn sie host-intern eindeutig sind.

Ein Beispiel, das nicht Teil der vorliegenden Erfindung ist, für eine solche lokale Information sind die Pseudo-Interface-Namen von IPv4 Adressen. Werden einer Netzwerk-Schnittstelle mehrere IPv4 Adressen zugewiesen, so muss vorzugsweise jeder dieser IP-Adressen eine eigene Pseudo-Netzwerk-Schnittstelle mit jeweils einem vorzugsweise host-intern eindeutigen Pseudo-Interface-Namen zugeordnet werden. Diese Pseudo-Interface-Namen sind auch zur Herleitung der virtuellen Interface-Identifier geeignet.

Zu jeder zusätzlichen IP Adresse einer Netzwerk-Schnittstelle wird zunächst ein virtueller Interface-Name generiert oder konfiguriert. Es gibt dabei grundsätzlich keine Einschränkungen bei der Bildung des virtuellen Interface-Namens; er ist aber vorzugsweise host-intern eindeutig, denn er dient als lokale Information bei der Generierung des virtuellen Interface-Identifiers.

Die Erzeugung eines virtuellen Interface-Identifiers baut auf dem in RFC 2464 beschriebenen Verfahren auf. Hierbei geht die MAC Adresse als global eindeutige Information wie gewohnt in den Interface-Identifier mit ein. Der "gewöhnliche" Interface-Identifier wird jedoch modifiziert: Der feste Mittelteil (OxFFFE) wird ersetzt, wobei zur Generierung eines neuen Mittelteils eine lokale Information, z.B. der virtuelle Interface-Name, verarbeitet wird.

Vorzugsweise wird das Universal/Local-Bit invertiert, um bekannt zu machen, dass bei der Erzeugung dieses Interface-Identifiers lokale Information mit verwendet wurde.

Dem Fachmann ist anhand der vorliegenden Beschreibung klar, das ein neuer Mittelteil für den virtuellen Interface-Identifier auch auf andere Weisen konstruiert werden kann, die hier nicht alle abschließend dargestellt werden können. Stets wird hierbei eine (im Grunde genommen beliebige) lokale Information verwendet, um die entstehenden virtuellen Interface-Identifier host-intern voneinander unterscheiden zu können. Die folgenden Beispiele nutzen jeweils den virtuellen Interface-Namen als lokale Information.

Ein weiteres bevorzugtes Beispiel für eine solche lokale Information sind persistente Tabellen. Dabei wird einer Netzwerk-Schnittstelle eine persistente Tabelle zugeordnet, in welcher die virtuellen Interface-Namen gespeichert sind. Der Tabellenindex i einer Zeile modifiziert den alten Mittelteil. Eine Möglichkeit hierfür ist z.B. die Ersetzung Wert_neu = OxFFFE - i.

Ein weiteres bevorzugtes Beispiel für ein Verfahren zur Konstruktion eines neuen Mittelteils für den virtuellen Interface-Identifier sind sogenannte Checksum-Verfahren. Der virtuelle Interface-Name dient dabei als Eingangsdatum für einen Checksum-Algorithmus, wobei die Blockgröße vorzugsweise 16 Bit beträgt. Die Checksum ersetzt den alten Mittelteil OxFFFE. Bevorzugte Checksum-Algorithmen sind beispielsweise die Paritatsprüfung, die (gewöhnliche) Modulo-Addition, die Einer-Komplement- Addition, die Fletcher-Checksum und die Adler-Checksum.

Ein weiteres bevorzugtes Beispiel für ein Verfahren zur Konstruktion eines neuen Mittelteils für den virtuellen Interface-Identifier sind sogenannte CRC-Verfahren. Der virtuelle Interface-Name dient hierbei als Eingangsdatum für einen CRC-Algorithmus, wobei ein Generator-Polynom vom Grad 16 zur Anwendung kommt. Die 16 Bit breite CRC-Checksum ersetzt den alten Mittelteil OxFFFE. CRC-Algorithmen basieren auf der Polynomdivision (modulo 2) mit binaren Koeffizienten; gängige Verfahren sind u. a. CRC-16-IBM/ANSI (USB, ...), CRC-16-CCITT (X.25, HDLC, Bluetooth, SO, ...), CRC-16-DECT.

Ein weiteres bevorzugtes Beispiel für ein Verfahren zur Konstruktion eines neuen Mittelteils für den virtuellen Interface-Identifier sind sogenannte Hash-Verfahren Der virtuelle Interface-Name dient hierbei als Eingangsdatum für einen Hash-Algorithmus. Der 16 Bit breite Hash-Wert ersetzt den alten Mittelteil OxFFFE. Grundsätzlich gibt es keine Einschränkung bei der Auswahl eines Hash-Algorithmus. Kryptografische Hash-Algorithmen haben, verglichen mit nicht-

EP 2 697 956 B1

kryptografischen Hash-Algorithmen, lediglich den Nachteil eines sehr hohen Rechenaufwandes. Liefert ein Hash-Algorithmus zunächst einen breiteren Hash-Wert, so muss dieser abschließend z.B. mittels XOR-Folding auf 16 Bit Breite reduziert werden. Die so erzeugten virtuellen Interface-Identifier sind mit sehr hoher Wahrscheinlichkeit wieder global eindeutig, denn die MAC Adresse geht unverändert darin ein. Da das Universal/Local-Bit aber auf "Local scope" gesetzt ist, kann nicht ausgeschlossen werden, dass der gleiche Interface-Identifier woanders mittels Zufallsgenerator erzeugt wurde. Das Risiko für solch eine zufällige Kollision beträgt $\left(\frac{1}{2}\right)^{63}$, was kleiner ist als $(10)^{-18}$; es ist damit verschwindend gering.

Das bekannte drei Schritte umfassende Verfahren (SLAAC) der Autokonfiguration wird erfindungsgemäß vorzugsweise an folgenden Stellen erweitert oder modifiziert:

i) Bei der Konstruktion der link-lokalen IPv6 Adressen werden zusätzlich zu der einen üblichen link-lokalen IPv6 Adresse weitere link-lokale IPv6 Adressen generiert. Ausgangspunkt ist dabei das Vorhandensein von lokaler Information, die vorzugsweise vorher manuell konfiguriert wird, vorzugsweise in Form einer Liste für jede zusätzlich benötigte weitere link-lokale IPv6 Adresse. Aus der Liste lokaler Informationen sowie der (globalen) MAC Adresse werden zunächst alle benötigten virtuellen Interface-Identifier konstruiert. Das Verfahren prüft für jeden neuen virtuellen Interface-Identifier auch, ob er bereits existiert (Kollisionsprüfung). Bei Erkennen einer Kollision wird die Autokonfiguration für diesen virtuellen Interface-Identifier abgebrochen. Zu jedem virtuellen Interface-Identifier wird dann durch Voranstellen des link-lokalen Prefix (0xFE80::/64) eine link-lokale IPv6 Adresse gebildet. Schließlich werden alle so erzeugten link-lokalen IPv6 Adressen an der Netzwerk-Schnittstelle gesetzt.

ii) Die Router Discovery kann unverändert bleiben. Ein Globales Präfix oder Prefix (IPv6 Netzadresse) und ein Default Router werden in bekannter Weise in den Router Advertisement Meldungen bekannt gemacht.

iii) Die Konstruktion globaler IPv6 Adressen aus link-lokalen IPv6 Adressen erfolgt nun, indem man das link-lokale Prefix (0xFE80::/64) durch ein globales Prefix (welches nach erfolgreicher Router Discovery als bekannt vorausgesetzt werden darf) ersetzt. Dabei wird für jede der link-lokalen IPv6 Adressen eine eigene globale IPv6 Adresse entsprechend gebildet und an der Netzwerk-Schnittstelle gesetzt.

Die Vergabe der IPv6 Adressen kann vollständig automatisiert durchgeführt werden - manuelle IPv6 Adresskonfiguration ist dazu nicht erforderlich. Wenn nur eine LAN-Karte in Betrieb ist, dann wird auch nur eine MAC Adresse benötigt. Dies gilt selbst dann, wenn mehrere IP Adressen autokonfiguriert werden.

Nachstehend wird ein konkretes Beispiel für die Konstruktion mehrerer link-lokaler IP-Adressen aus derselben MAC-Adresse gemäß einem bevorzugten Ausführungsbeispiel der Erfindung angegeben:

Konstruktion mehrerer link-lokaler IP Adressen aus derselben MAC Adresse (NEU)

Beispiel: Liste mit Pseudo-Interface-Namen

| | |
|---|---|
| eth0 | FE80::02:1A:E8:FF:FE:84:30:12 |
| eth0:ncui_sig | FE80::00:1A:E8:AF:4F:84:30:12 |
| eth0:ncui_pld | FE80::00:1A:E8:A9:52:84:30:12 |
| eth0:pbc_2 | FE80::00:1A:E8:97:A9:84:30:12 |
| eth0:pbc_3 | FE80::00:1A:E8:97:AA:84:30:12 |
| eth0:pbc_4 | FE80::00:1A:E8:97:AB:84:30:12 |

Algorithmus:

- bilde die 16-bit Checksum über den Interface-Namen
- ersetze 0xFFFE durch die Checksum

9

- setze das Universal/Local Bit: 0 (Local Scope)

Falls eine Adress-Kollision erkannt wird: abbrechen der Autokonfiguration

Die Figur 1 zeigt in schematischer Weise den Ablauf des erfindungsgemäßen Verfahrens gemäß einer bevorzugten Ausführungsform. Aus einem vorhandenen Identifikator (a) und einer konfigurierten Zusatzinformation (b) wird ein virtueller Identifikator (c) erzeugt (1). Aus wenigstens einem virtuellen Identifikator (c) wird eine Adresse (e,d) erzeugt (2). Die erzeugten Adressen oder Identifikatoren werden auf das Vorliegen einer Kollision geprüft (3). Ergibt diese Prüfung (3a) eine Kollision (f), werden die kollidierenden virtueller Identifikatoren oder die aus diesen virtuellen Identifikatoren erzeugten Adressen verworfen (4). Das Bezugszeichen g bezeichnet die kollisionsfreien Adressen nach abgeschlossener Kollisionsprüfung.

Die Erzeugung der Adressen aus den Identifikatoren kann auch später im Ablauf des Verfahrens erfolgen. Dann werden die Verfahrensschritte bis zur Erzeugung der Adressen an den virtuellen Identifikatoren vorgenommen, aus denen diese Adressen anschließend erzeugt werden.

## Patentansprüche

1. Verfahren zur Erzeugung einer Mehrzahl von Adressen (h) für ein Netzwerkelement eines Kommunikationsnetzes, wobei

   1a) das Kommunikationsnetz ein Netzwerk ist, in dem Nachrichten paketvermittelt unter Verwendung eines im Internet verwendeten Protokolls, zwischen Netzwerkelementen übertragen werden;
   1b) die Adressen IPv6-Adressen sind;
   1c) die vorhandenen Identifikatoren der Netzwerkelemente MAC-Adressen der Netzwerk-Schnittstellen dieser Netzwerkelemente sind,

   **gekennzeichnet durch** die folgenden Schritte:

   2a) Erzeugung (1) eines virtuellen Interface-Identifiers (c) für jede zu erzeugende Adresse durch Kombination des vorhandenen Identifikators (a) dieses Netzwerkelements als global eindeutige Information mit wenigstens einer lokalen Zusatzinformation (b), die host-intern eindeutig ist, wobei der virtuelle Interface-Identifier einen Mittelteil aufweist und zur Generierung des Mittelteils die lokale Zusatzinformation verwendet wird, um innerhalb eines Hosts unterscheidbare virtuelle Interface-Identifier zu erzeugen; wobei zur Erzeugung des virtuellen Interface-Identifiers aus der MAC-Adresse des Netzwerkelements ein gemäß dem in RFC 2464 beschriebenen Verfahren erzeugter Interface-Identifier nach dem EUI-64 Format mit einem festen Mittelteil dadurch modifiziert wird, dass der feste Mittelteil OxFFFE ersetzt wird durch den Mittelteil, zu dessen Generierung die lokale Zusatzinformation verwendet wird;
   2b) Erzeugung (2) einer Adresse (d) aus dem erzeugten virtuellen Interface-Identifier (c);
   2c) Prüfung (3) der so erzeugten virtuellen Interface-Identifier oder der aus diesen virtuellen Interface-Identifier erzeugten Adressen auf das Vorliegen einer Kollision;
   2d) Verwerfen (4) kollidierender virtueller Interface-Identifier oder der aus diesen virtuellen Interface-Identifier erzeugten Adressen.

2. Verfahren nach Anspruch 1, **dadurch gekennzeichnet, dass** aus einem virtuellen Interface-Identifier eine link-lokale Adresse erzeugt wird, indem diesem virtuellen Interface-Identifier ein link-lokales Präfix vorangestellt wird.

3. Verfahren nach Anspruch 2, **dadurch gekennzeichnet, dass** aus einer link-lokalen Adresse eine globale Adresse erzeugt wird, indem das link-lokale Präfix durch ein globales Präfix ersetzt wird.

4. Verfahren nach Anspruch 3, **dadurch gekennzeichnet, dass** zur Erzeugung der globalen Adresse eine Autokonfiguration der Adresse des Netzwerkelements im Rahmen der sogenannten StateLess Address Auto Configuration, wie sie im RFC 4862 für IPv6-Adressen spezifiziert ist, gemäß den vorhergehenden Ansprüchen derart erweitert und modifiziert wird, dass die link-lokale Adresse an der Netzwerk-Schnittstelle gesetzt wird, das globale Präfix und ein Default Router in Router Advertisement Meldungen bekannt gemacht werden und die globale Adresse an der Netzwerk-Schnittstelle gesetzt wird.

5. Verfahren nach Anspruch 4, **dadurch gekennzeichnet, dass** die Erzeugung der globalen Adresse vollständig automatisiert durchgeführt wird.

6. Verfahren nach Anspruch 1, **dadurch gekennzeichnet, dass** zur Erzeugung des virtuellen Interface-Identifiers aus der MAC-Adresse des Netzwerkelements der feste Mittelteil durch ein Bild einer in dem Netzwerkelement lokal gespeicherten Zusatzinformation unter einer Hashfunktion ersetzt wird, wobei das Bild der Wert ist, den die Hashfunktion ergibt, wenn als Eingangswert der Hashfunktion die in dem Netzwerkelement lokal gespeicherte Zusatzinformation verwendet wird.

7. Verfahren nach einem der vorhergehenden Ansprüche, **dadurch gekennzeichnet, dass** die Erzeugung einiger oder aller Adressen aus einigen oder allen erzeugten virtuellen Interface-Identifier erst nach wenigstens einem weiteren Verfahrensschritt stattfindet, also nicht unmittelbar nach der Erzeugung der virtuellen Interface-Identifier.

8. Verfahren nach einem der vorhergehenden Ansprüche, **dadurch gekennzeichnet, dass** die lokale Zusatzinformation in Form einer Tabelle vorliegt, in deren Einträgen unterschiedliche Werte für Namen virtueller Interface-Identifier gespeichert sind.

9. Verfahren nach einem der vorhergehenden Ansprüche, **dadurch gekennzeichnet, dass** die lokale Zusatzinformation als Eingangsdatum für einen Prüfsummen-Algorithmus, bei dem Bits, Bytes oder eine andere grundlegende Komponente von Daten mit einem bestimmten Faktor multipliziert und anschließend der Reihenfolge nach aufsummiert werden, verwendet wird, um den Mittelteil des virtuellen Interface-Identifiers zu erzeugen.

10. Verfahren nach einem der vorhergehenden Ansprüche, **dadurch gekennzeichnet, dass** der Mittelteil des virtuellen Interface-Identifiers mit Hilfe eines Algorithmus zur Zyklischen Redundanzprüfung, die eine Polynomdivision verwendet, aus der lokalen Zusatzinformation ermittelt wird.

11. Verfahren zur Übertragung von Nachrichten in einem Kommunikationsnetz unter Verwendung einer Adresse, die nach einem Verfahren nach einem der vorhergehenden Ansprüche erzeugt wurde.

12. Netzwerkelement mit einer Einrichtung zur Durchführung eines Verfahrens nach einem der vorhergehenden Ansprüche.

**Claims**

1. A method for generating a plurality of addresses (h) for a network element of a communication network, wherein

   1a) the communication network is a network in which messages are transferred between network elements in packets, using a protocol used in the Internet;
   1b) the addresses are IPv6 addresses;
   1c) the existing identifiers of the network elements are MAC addresses of the network interfaces of said network elements,

   **characterized by** the following steps:

   2a) generating (1) a virtual interface identifier (c) for each address to be generated, by combining the existing identifier (a) of the respective network element as a globally unique information with at least one local additional information (b), which is unique within the host, wherein the virtual interface identifier has a middle portion and the local additional information is used to generate the middle portion, in order to generate virtual interface identifiers distinguishable within a host; wherein, in order to generate the virtual interface identifier from the MAC address of the network element, an interface identifier following the EUI-64 format, which has a fixed middle portion and which has been generated according to the method described in RFC 2464, is modified by replacing the fixed middle portion OxFFFE with the middle portion which has been generated using the local additional information;
   2b) generating (2) an address (d) from the generated virtual interface identifier (c);
   2c) reviewing (3) the virtual interface identifiers thus generated or the addresses generated from said virtual interface identifiers for the presence of a collision;
   2d) discarding (4) colliding virtual interface identifiers or the addresses generated from said virtual interface identifiers.

2. The method according to Claim 1, **characterized in that** a link-local address is generated from a virtual interface identifier by adding a link-local prefix to this virtual interface identifier.

3. The method according to Claim 2, **characterized in that** a global address is generated from a link-local address by replacing the link-local prefix with a global prefix.

4. The method according to Claim 3, **characterized in that,** in order to generate the global address, an auto configuration of the address of the network element is expanded and modified according to the preceding claims in the context of the so-called stateless address auto configuration, as specified for IPv6 addresses in RFC 4862, such that the link-local address is set at the network interface, the global prefix and a default router are announced in router advertisement messages, and the global address is set at the network interface.

5. The method according to Claim 4, **characterized in that** the generation of the global address is executed in a fully automated manner.

6. The method according to Claim 1, **characterized in that,** in order to generate the virtual interface identifier from the MAC address of the network element, the fixed middle portion is replaced by a digest of the additional information stored locally in the network element using a hash function, wherein the digest is the value which results from the hash function when the additional information stored locally in the network element is used as the input value of the hash function.

7. The method according to any one of the preceding claims, **characterized in that** the generation of some or all addresses from some or all generated virtual interface identifiers only is performed after at least one further method step, that is, not immediately after the generation of the virtual interface identifiers.

8. The method according to any one of the preceding claims, **characterized in that** the local additional information is available in the form of a table, the entries of which store various values for the names of virtual interface identifiers.

9. The method according to any one of the preceding claims, **characterized in that** the local additional information is used as the input data for a checksum algorithm, in which bits, bytes or another fundamental component of data are multiplied by a certain factor and then summed in sequence, in order to generate the middle portion of the virtual interface identifier.

10. The method according to any one of the preceding claims, **characterized in that** the middle portion of the virtual interface identifier is determined from the local additional information with the help of an algorithm for cyclic redundancy checking using a polynomial division.

11. A method for transferring messages in a communication network through the use of an address generated using a method according to any one of the preceding claims.

12. A network element having a device for executing a method according to any one of the preceding claims.

**Revendications**

1. Procédé pour générer une pluralité d'adresses (h) pour un élément de réseau d'un réseau de communication, dans lequel

   1a) le réseau de communication est un réseau, dans lequel des messages sont transmis par paquets entre des éléments de réseau en utilisant un protocole utilisé dans Internet ;
   1b) les adresses sont des adresses IPv6 ;
   1c) les identificateurs présents des éléments de réseau sont des adresses MAC des interfaces de réseau de ces éléments de réseau,

   **caractérisé par** les étapes suivantes :

   2a) génération (1) d'un identifiant d'interface virtuel (c) pour chaque adresse à générer par combinaison de l'identificateur présent (a) de ces éléments de réseau en tant qu'information globalement univoque avec au moins une information supplémentaire locale (b), qui est univoque à l'intérieur de l'hôte, dans lequel l'identifiant d'interface virtuel présente une partie centrale et l'information supplémentaire locale est utilisé pour la génération de la partie centrale pour générer des identifiants d'interface virtuels différenciables à l'intérieur d'un hôte ;

dans lequel pour la génération de l'identifiant d'interface virtuel à partir de l'adresse MAC de l'élément de réseau, un identifiant d'interface généré selon le procédé décrit dans RFC 2464 selon le format EUI-64 avec une partie centrale fixe est modifiée par le fait que la partie centrale OxFFFE est remplacée par la partie centrale, pour laquelle génération l'information supplémentaire locale est utilisée ;

2b) génération (2) d'une adresse (d) à partir de l'identifiant d'interface virtuel (c) généré ;

2c) contrôle (3) des identifiants d'interface virtuels ainsi générés ou des adresses générées à partir de ces identifiants d'interface virtuels quant à la présence d'une collision ;

2d) rejet (4) d'identifiants d'interface virtuels en collision ou des adresses générées à partir de ces identifiants d'interface virtuels.

2. Procédé selon la revendication 1, **caractérisé en ce qu'**une adresse locale de lien est générée à partir d'un identifiant d'interface virtuel par le fait qu'un préfixe local de lien est placé en amont de cet identifiant d'interface virtuel.

3. Procédé selon la revendication 2, **caractérisé en ce qu'**une adresse globale est générée à partir d'une adresse locale de lien par le fait que le préfixe local de lien est remplacé par un préfixe global.

4. Procédé selon la revendication 3, **caractérisé en ce que** pour la génération de l'adresse globale, une auto-configuration de l'adresse de l'élément de réseau est étendue et modifiée dans le cadre de ladite StateLess Address Auto Configuration, comme elle est spécifiée dans RFC 4862 pour des adresses IPv6, selon les revendications précédentes de sorte que l'adresse locale de lien est réglée au niveau de l'interface de réseau, le préfixe global et un routeur par défaut sont publiés dans les messages Router Advertisement et l'adresse globale est réglée sur l'interface de réseau.

5. Procédé selon la revendication 4, **caractérisé en ce que** la génération de l'adresse globale est réalisée de manière entièrement automatisée.

6. Procédé selon la revendication 1, **caractérisé en ce que** pour la génération de l'identifiant d'interface virtuel à partir de l'adresse MAC de l'élément de réseau, la partie centrale fixe est remplacée par une image d'une information supplémentaire enregistrée localement dans l'élément de réseau sous une fonction de hachage, dans lequel l'image est la valeur que donne la fonction de hachage, lorsque l'information supplémentaire enregistrée localement dans l'élément de réseau est utilisée en tant que valeur d'entrée.

7. Procédé selon l'une quelconque des revendications précédentes, **caractérisé en ce que** la génération de quelques ou de toutes les adresses à partir de quelques ou tous les identifiants d'interface virtuels générés n'a lieu qu'après au moins une autre étape de procédé, donc par directement après la génération des identifiants d'interface virtuels.

8. Procédé selon l'une quelconque des revendications précédentes, **caractérisé en ce que** l'information supplémentaire locale est présente sous la forme d'un tableau, dans lesquelles entrées, différentes valeurs sont enregistrées pour des noms d'identifiants d'interface virtuels.

9. Procédé selon l'une quelconque des revendications précédentes, caractérisé que l'information supplémentaire locale est utilisée en tant que donnée d'entrée pour un algorithme de somme de contrôle, dans lequel des bits, des bytes ou un autre composant fondamental de données sont multipliés avec un facteur déterminé et ensuite additionnés dans l'ordre pour générer la partie centrale de l'identifiant d'interface virtuel.

10. Procédé selon l'une quelconque des revendications précédentes, caractérisé que la partie centrale de l'identifiant d'interface virtuel est déterminée à partir de l'information supplémentaire locale à l'aide d'un algorithme pour le contrôle de redondance cyclique, qui utilise une division polynomiale.

11. Procédé de transmission de messages dans un réseau de communication en utilisant une adresse, qui a été générée selon un procédé selon l'une quelconque des revendications précédentes.

12. Élément de réseau avec un dispositif pour la réalisation d'un procédé selon l'une quelconque des revendications précédentes.

Fig. 1